# EUROPEAN PATENT APPLICATION

(11) **EP 4 303 628 A1**
(43) Date of publication of application: **10.01.2024**
(21) Application number: 21928954.3
(22) Date of filing: 01.03.2021
(51) Int. Cl.: G01S 17/89

(54) **INFORMATION PROCESSING DEVICE, CONTROL METHOD, PROGRAM, AND STORAGE MEDIUM**

(71) Applicant: Pioneer Corporation, Tokyo 113-0021 (JP); Pioneer Smart Sensing Innovations Corporation, Tokyo 113-0021 (JP)
(72) Inventor: KURAHASHI, Makoto, Kawagoe-shi, Saitama 350-8555 (JP)
(74) Representative: Viering, Jentschura & Partner mbB Patent- und Rechtsanwälte
(86) International application number: PCT/JP2021/007697
(87) International publication number: WO 2022/185376

(57) **Abstract**

A controller 13 of the information processing device 1 is configured to acquire a measurement result for each measurement direction by a lidar 3 that is a measurement device configured to perform measurement from a fixed position. Then, the controller 13 is configured to determine a transmission frequency of transmitting, to the data collection device 200, the measurement result for a measurement point at which it is determined that a stationary object is measured, based on a degree of stability at the measurement point.

## Description

### TECHNICAL FIELD

The present disclosure relates to processing of measured data.

### BACKGROUND

Conventionally, there is known a laser radar device configured to radiate a pulse of laser light into a target space of detection and detect an object in the target space based on the level of the reflection light. For example, Patent Literature 1 discloses a lidar configured to scan the peripheral space by appropriately controlling the emission direction (scanning direction) of the light pulse to be repeatedly emitted and measure the return light thereby to generate point cloud data indicating peripheral object information such as distance information and reflectance information. Further, in order to determine the accurate number of background objects based on the observation data even when the observation data from a ranging device fluctuates, Patent Literature 2 discloses a technique of comparing the observation data obtained from a ranging device with distance data of a background candidate stored in a background candidate data storage unit and then counting up the number of times the background candidate of the distance data matched with the observation data is observed.

### PRIOR ART DOCUMENTS

### PATENT LITERATURE

Patent Literature 1: JP2018-009831A
Patent Literature 2: JP2017-207365A

### SUMMARY

### PROBLEM TO BE SOLVED BY THE INVENTION

In such a case where point cloud data generated according to a predetermined scanning period by measurement equipment such as a lidar is uploaded to a server device which collects and manages the point cloud data, data amount of the generated point cloud data is so large that the data communication load and the processing load of the server device could become excessive. Especially, when the measurement equipment is fixed, there is an issue that the amount of data to be uploaded increases uselessly when the data of stationary objects that are stably measured is uploaded as it is.

The present disclosure has been made in order to solve the above issues, and it is an object of the present invention to provide an information processing device capable of suitably reducing the amount of data of the measurement data to be uploaded.

### MEANS FOR SOLVING THE PROBLEM

One invention is an information processing device including:
an acquisition unit configured to obtain a measurement result for each measurement point corresponding to a measurement direction by a measurement device for performing measurement from a fixed position;
a determination unit configured to determine, for the each measurement point, whether or not an assumed stationary object is measured, based on the measurement result; and
a transmission frequency control unit configured to determine transmission frequency of transmitting, to a data collection device, the measurement result of a measurement point at which it is determined that the assumed stationary object is measured, based on a degree of stability of measurement of the assumed stationary object at the measurement point.

Another invention is a control method executed by a computer, the control method including:
obtaining a measurement result for each measurement point corresponding to a measurement direction by a measurement device for performing measurement from a fixed position;
determining, for the each measurement point, whether or not an assumed stationary object is measured, based on the measurement result; and
determining transmission frequency of transmitting, to a data collection device, the measurement result of a measurement point at which it is determined that the assumed stationary object is measured, based on a degree of stability of measurement of the assumed stationary object at the measurement point.

Still another invention is a program causing a computer to:
obtain a measurement result for each measurement point corresponding to a measurement direction by a measurement device for performing measurement from a fixed position;
determine, for the each measurement point, whether or not an assumed stationary object is measured, based on the measurement result; and
determine transmission frequency of transmitting, to a data collection device, the measurement result of a measurement point at which it is determined that the assumed stationary object is measured, based on a degree of stability of measurement of the assumed stationary object at the measurement point.

### BRIEF DESCRIPTION OF THE DRAWINGS

[FIG. 1] It is a schematic configuration of a lidar unit according to a first embodiment.
[FIG. 2] It is a block diagram showing an example of a hardware configuration of an information processing device.
[FIG. 3] It is a diagram schematically showing a target space of measurement by a lidar.
[FIG. 4] It is an example of a table showing the interpretation of the first stability.
[FIG. 5] It is a graph showing the relation between the distance measured by the lidar and time during the period of interest in the generation of the distance histogram at a certain measurement point.
[FIG. 6] It is a diagram showing a distance histogram and the measurement time information based on FIG. 5.
[FIG. 7] FIG. 7A and FIG. 7B illustrate graphs indicating the measured distance history at a certain measurement point.
[FIG. 8] It is an example of a flowchart showing the procedure of the generation and update process of the stability information in the first embodiment.
[FIG. 9] It illustrates a schematic configuration of a data collection system in the second embodiment.
[FIG. 10] FIG. 10A and FIG. 10B illustrates a graph representing the time variation of the measured distance at a certain measurement point and the corresponding histogram of the measured distance.
[FIG. 11] It is an example of a flowchart illustrating a procedure of the upload process according to the second embodiment.

### DETAILED DESCRIPTION OF PREFERRED EMBODIMENTS

According to a preferred embodiment of the present invention, the information processing device includes: an acquisition unit configured to obtain a measurement result for each measurement point corresponding to a measurement direction by a measurement device for performing measurement from a fixed position; a determination unit configured to determine, for the each measurement point, whether or not an assumed stationary object is measured, based on the measurement result; and a transmission frequency control unit configured to determine transmission frequency of transmitting, to a data collection device, the measurement result of a measurement point at which it is determined that the assumed stationary object is measured, based on a degree of stability of measurement of the assumed stationary object at the measurement point. According to this embodiment, the information processing device can suitably determine the transmission frequency of the measurement result of the assumed stationary object, suitably reducing the amount of data to be uploaded.

In one mode of the information processing device, the information processing device further includes a transmission unit configured to transmit, to the data collection device with the transmission frequency, the measurement result of the measurement point at which it is determined that the assumed stationary object is measured, and transmit, to the data collection device immediately, the measurement result of a measurement point at which it is determined that the assumed stationary object is not measured. According to this mode, the information processing device can upload the measurement result generated by the measurement device to the data collection device.

In another mode of the information processing device, the measurement device is configured to measure a distance for the each measurement point, wherein the determination unit is configured to determine, for the each measurement point, whether or not the assumed stationary object is measured, based on a difference between a measured distance measured by the measurement device and an assumed distance to the assumed stationary object. According to this mode, the information processing device can suitably determine, for each measurement point, whether or not the assumed stationary object is measured.

In still another mode of the information processing device, the determination unit is configured to determine, for the each measurement point, whether or not the assumed stationary object is measured, based on the difference and a threshold value set based on an index of variation in the past measured distance. According to this mode, the information processing device can suitably determine, for each measurement point, whether or not the assumed stationary object is measured, in consideration of the statistical error.

In still another mode of the information processing device, the determination unit is configured to determine, for the each measurement point, whether or not the assumed stationary object is measured, based on the difference and a threshold value set based on the degree of stability. According to this mode, the information processing device can accurately determine whether or not the assumed stationary object is measured in consideration of the degree of stability at which the assumed stationary object is measured.

In still another mode of the information processing device, the transmission frequency control unit is configured to determine the transmission frequency, based on the degree of stability identified by referring to stability information indicating the degree of stability for the each measurement point. According to this mode, the information processing device precisely grasps the degree of stability for each measurement point thereby to determine the transmission frequency of the measurement result for each measurement point by the measurement device. In some embodiments of the information processing device, the information processing device further includes a generation unit configured to generate the stability information based on time series measurement results for the each measurement point by the measurement device.

In still another mode of the information processing device, the degree of stability is a first stability degree representing a degree of stability of existence of the assumed stationary object as a stationary object, a second stability degree representing a degree of stability of measurement of the assumed stationary object without being shielded by another object, or an index obtained by merging the first stability degree and the second stability degree.

According to another preferred embodiment of the present invention, there is provided control method executed by a computer, the control method including: obtaining a measurement result for each measurement point corresponding to a measurement direction by a measurement device for performing measurement from a fixed position; determining, for the each measurement point, whether or not an assumed stationary object is measured, based on the measurement result; and determining transmission frequency of transmitting, to a data collection device, the measurement result of a measurement point at which it is determined that the assumed stationary object is measured, based on a degree of stability of measurement of the assumed stationary object at the measurement point. By executing the control method, the information processing device can suitably reduce the amount of data to be uploaded.

According to still another preferred embodiment of the present invention, there is provided a program executed by a computer, the program causing the computer to: obtain a measurement result for each measurement point corresponding to a measurement direction by a measurement device for performing measurement from a fixed position; determine, for the each measurement point, whether or not an assumed stationary object is measured, based on the measurement result; and determine transmission frequency of transmitting, to a data collection device, the measurement result of a measurement point at which it is determined that the assumed stationary object is measured, based on a degree of stability of measurement of the assumed stationary object at the measurement point. By executing the program, the computer can suitably reduce the amount of data to be uploaded. In some embodiments, the program is stored in a storage medium.

### EMBODIMENTS

Hereinafter, preferred embodiments of the present invention are described below with reference to drawings.

### <First Embodiment>

### (1) Overview of Lidar Unit

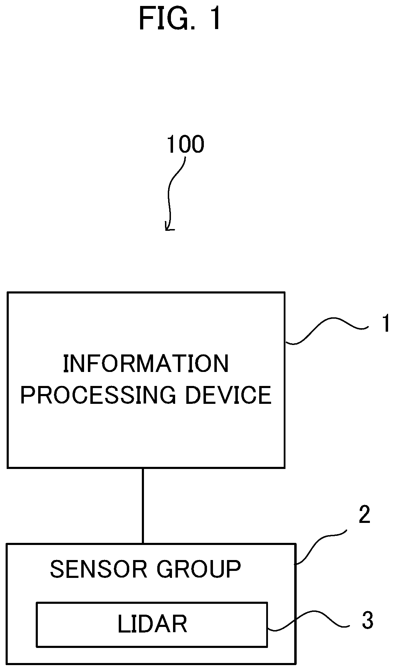

FIG. 1 is a schematic configuration of a lidar unit 100 according to the first embodiment. The lidar unit 100 includes an information processing device 1 that performs processing related to data generated by a sensor group 2, and the sensor group 2 including at least a lidar (Lidar: Light Detection and Ranging, or Laser Illuminated Detection And Ranging) 3. The lidar unit 100 is fixedly installed indoors or outdoors, and generates information (also referred to as "stability information") indicating the degree of stability of measurement of a stationary object present in the measurement range of the lidar 3.

The information processing device 1 is electrically connected to the sensor group 2 and processes data outputted by various sensors included in the sensor group 2. In the present embodiment, the information processing device 1 generates, based on the point cloud data generated by the lidar 3 in time series in the past and at present, stability information indicating at least the degree of stability for each measurement direction in the measurement range of the lidar 3. The stability information is, for example, information indicating the distance to a stationary object assumed to be measured and the degree of stability for each measurement direction. The generation process of the stability information and the interpretation of the degree of stability will be described later. For example, the information processing device 1 is fixedly installed in a condition of being accommodated in a housing body together with the lidar 3. It is noted that the information processing device 1 may be provided integrally with the lidar 3 as an electronic control device of the lidar 3.

The lidar 3 discretely measures the distance to an external object by emitting a pulse laser while changing the angle within a predetermined angle range in the horizontal and vertical directions. In this case, the lidar 3 is equipped with a radiation unit for radiating a laser beam while changing the irradiation direction (i.e., the scanning direction), a light receiving unit for receiving the reflected light (scattered light) of the radiated laser beam, and an output unit for outputting data based on the received light signal outputted by the light receiving unit. The measurement data generated by the lidar 3 for each irradiation direction of the pulsed laser is generated based on the irradiation direction corresponding to the laser beam received by the light receiving unit and the response delay time of the laser beam which is identified by the received light signal described above. Then, the lidar 3 generates, as point cloud data, data of respective measurement points within the measurement range (i.e., irradiation range of the pulse laser) of the lidar 3 in one scanning cycle period. The lidar 3 is an example of the "measurement device" in the present invention. Incidentally, the lidar 3 is not limited to the above-described scan type lidar and may be a flash type lidar configured to generate three-dimensional data by diffusing and radiating a laser beam to the field of view of the two-dimensional sensor array. Hereafter, the point corresponding to each measurement direction of the point cloud data generated by the lidar 3 is also referred to as "measurement point".

The sensor group 2 may include various external sensors or/and internal sensors in addition to the lidar 3. For example, the sensor group 2 may include a GPS (Global Positioning Satellite) receiver or the like required to generate the position data.

### (2) Configuration of Information Processing Device

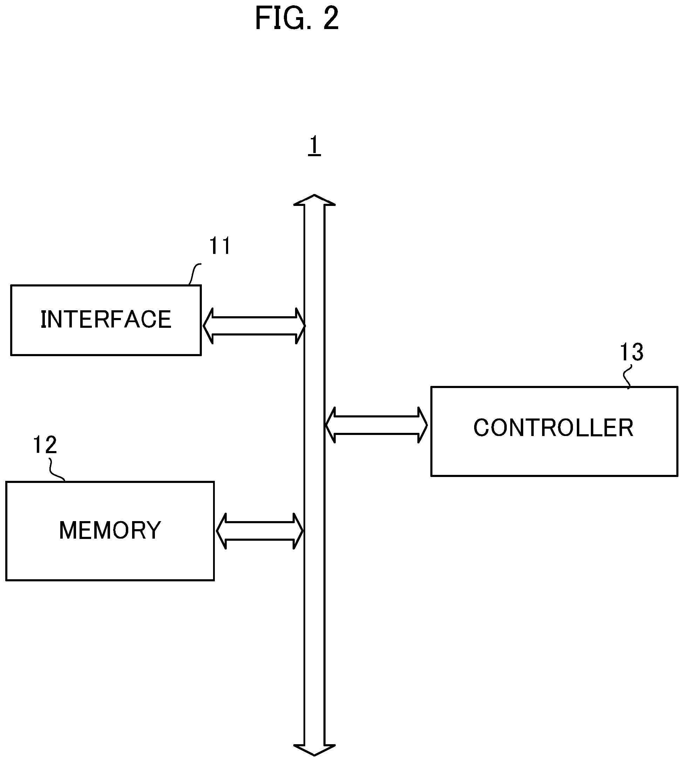

FIG. 2 is a block diagram illustrating an example of a hardware configuration of the information processing device 1. The information processing device 1 mainly includes an interface 11, a memory 12, and a controller 13. Each of these elements is connected to each other through a bus line.

The interface 11 performs the interface operation related to the transfer of data between the information processing device 1 and an external device. In this example, the interface 11 acquires the output data from the sensor group 2 such as a lidar 3, and supplies the controller 13 with the data. Examples of the interface 11 include a wireless interface, such as a network adapter, for performing wireless communication, and a hardware interface, such as a cable, for connecting to an external device. The interface 11 may also perform interface operations with various peripheral devices such as an input device, a display device, a sound output device, and the like.

The memory 12 is configured by various volatile and non-volatile memories such as a RAM (Random Access Memory), a ROM (Read Only Memory), a hard disk drive, and a flash memory, and the like. The memory 12 stores a program for the controller 13 to perform a predetermined process. The program executed by the controller 13 may be stored in a storage medium other than the memory 12.

The controller 13 includes one or more processors, such as a CPU (Central Processing Unit), a GPU (Graphics Processing Unit), and a TPU (Tensor Processing Unit), and controls the entire information processing unit 1. In this case, the controller 13 executes a program stored in the memory 12 or the like to perform various processing to be described later.

The controller 13 functions as the "acquisition unit", "calculation unit", "generation unit", and a computer configured to execute a program.

The process performed by the controller 13 is not limited to being implemented in software by a program, but may be implemented by any combination of hardware, firmware, and software. The process performed by the controllers 13 may also be implemented using user programmable integrated circuitry such as, for example, a FPGA (Field-Programmable Gate Array) and a microcomputer. In this case, an integrated circuit may be used to implement a program that the controller 13 executes in this example.

### (3) Generation of Stability Information

Schematically, for each measurement point of the lidar 3, the controller 13 of the information processing device 1 generates histograms (also referred to as "distance histograms") of measured distances for predetermined time periods set at predetermined intervals, and generates a history of the measured distances to a stationary object based on the generated distance histograms. Then, the controller 13 generates stability information indicating the degree of stability of the stationary object equivalent to the length of existence period of the stationary object based on the history of the measured distances to the stationary object.

### (3-1) Consideration of Stability

First, the concept (notion) of the degree of stability to be calculated in this embodiment will be described. The degree of stability indicated by the stability information represents the degree of stability to be measured as the stationary object, and it may be synonymous with the first stability to be described later, or may be a concept including both the first stability degree and the second stability degree to be described later.

In the present embodiment, in principle, the information processing device 1 determines that the longer the stationary (still) time of an object (or a location) is, the higher the degree (also referred to as "first stability degree") of stability as a stationary object becomes. Namely, the first stability degree represents the degree of stable existence of an object subject to measurement as a stationary object. Furthermore, in addition to the first stability degree described above, the information processing device 1 may determine another degree of stability such that the smaller the number of moving objects (i.e., objects across the front) which block the irradiation of the laser beam onto the object from the lidar 3, the higher the other degree of stability becomes. The other degree of stability indicates the degree of stability of measurement without being shielded (so-called occlusion) of the laser beam by a moving object, and is hereinafter referred to as "second stability degree".

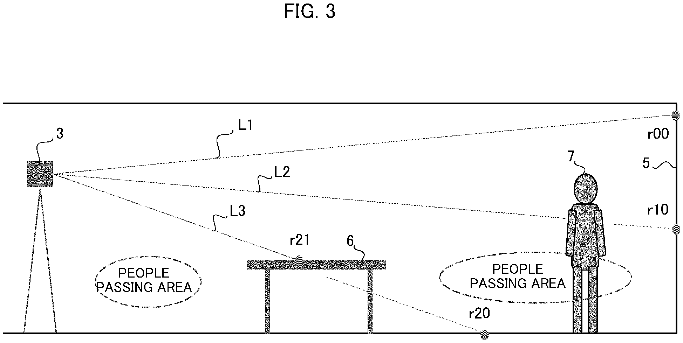

FIG. 3 is a diagram schematically showing a target space of measurement by the lidar 3. In FIG. 3, the lidar 3 (lidar unit 100) is fixedly installed, in the target space of measurement by the lidar 3, there are at least a wall 5, a structure 6 such as furniture, and a pedestrian 7. The lines "L1" to "L3" each represents the optical path of the laser beam corresponding to a certain measurement point, and "r00", "r10", "r20" and "r21" corresponding to the irradiated points of the laser beam on the lines L1 to L3 each represents the measured distance to the corresponding irradiated point.

Here, at the measurement point corresponding to the line L1, over a long time (e.g., 1 year), the distance r00 is measured at almost all times. In this case, it can be interpreted that there is a stationary object with a high first stability degree at the measurement point of interest. Further, at the measurement point corresponding to the line L1, since occlusion due to pedestrian travel does not occur, the second stability degree is also high.

Further, at the measurement point corresponding to the line L2, the distance r10 is measured over a long time (e.g., one year). However, since the laser beam passes the path of the pedestrian at a height lower than the pedestrian, the distance shorter than the distance r10 can be measured. In the example shown in FIG. 3, the pedestrian 7 is irradiated with a laser beam, a distance shorter than the distance r10 is measured. At this measurement point, the first stability degree is the same as the first stability degree of the measurement point corresponding to the line L1. On the other hand, the second stability degree of the measurement point corresponding to the line L2 is interpreted to be less than the second stability degree of the measurement point corresponding to the line L1.

Further, at the measurement point corresponding to the line L3, in the initial period (e.g., first 10 months), the distance r20 is measured, and then the distance r21 is measured in the current period (e.g., 2 months) after the initial period. In this instance, at the measurement point corresponding to the line L3, it is considered that there is a stationary object at the position of the distance r21 at present. Then, since the period in which the present stationary object has been measured is short, the first stability degree at the measurement point corresponding to the line L3 is interpreted to be lower than the first stability degree of the measurement points corresponding to the line L1 and line L2.

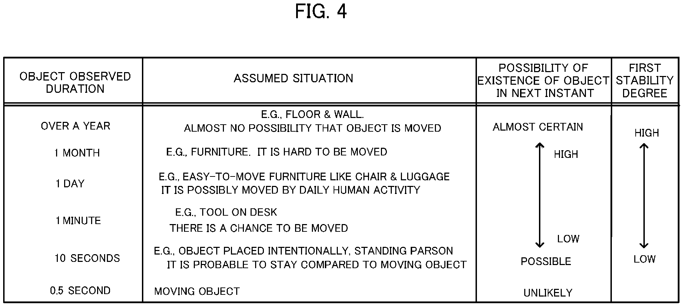

FIG. 4 is a table representing an example of the interpretation of the first stability degree. Here, the "object observed duration" represents the length of the period that the object has been observed continuously (or intermittently due to shielding by moving objects) up to the present, the "assumed situation" represents the assumed situation regarding whether the target object of measurement is a stationary object or not, and the "possibility of existence of object in next instant" represents the possibility of whether or not the currently-measured object continues to exist at the subsequent measurement time (i.e., at the next measurement timing).

As shown in FIG. 4, the possibility of existence of the object in the next instant increases with increase in the object observed duration. Then, it is assumed that the longer the object observed duration is, the lower the possibility of movement of an object becomes. In contrast, it is assumed that the shorter the object observed duration is, the higher the possibility of movement of an object becomes. Then, the first stability degree has a positive correlation with the possibility of existence of the object in the next instant, and the lower the possibility of existence of the object in the next instant is, the lower the first stability degree becomes.

Next, a supplementary description will be given of the second stability degree.

The second stability degree depends on the occurrence frequency of occlusion. In general, when a person passes in front (i.e., a position to block the laser beam from the lidar 3) of a stationary object, temporarily, the distance shorter than the distance to the stationary object is measured. The occurrence frequency of the shielding (occlusion) depends on the place and the time, e.g., whether the place is a place where there are many passing people or a place where there are few passing people.

For example, cases where measurement by the lidar 3 is performed for one year are herein considered, wherein the cases include a first case where the same distance is measured during the whole period equivalent to 100 % and a second case where the same distance is measured during almost whole period equivalent to 98 % and other distances during the rest 2 % period are also measured. In this case, it can be interpreted that the second stability degree of the first case is higher than that of the second case. Further, depending on the difference in the occurrence frequency of occlusion, for example, there is an effective case to adjust the transmission frequency of the measured data. The process related to this idea will be described in the second embodiment.

Next, a further supplementary description will be given of the determination method of the second stability degree when an object with a high first stability degree is temporarily shielded by another stationary object.

For example, there is a case where an object (also referred to as "second stationary object") is temporarily placed in front of a first stationary object such as a wall with an extremely high first stability degree. In this case, in the period in which the second stationary object is placed, the second stationary object is measured by a stable distance. Thus, depending on the elapsed time since the second stationary object is placed, the first stability degree with respect to the second stationary object is increasing.

On the other hand, from the viewpoint of the first stationary object, the second stationary object placed in front thereof is "temporarily placed object (an object passing the front)", and it is highly likely that the first stationary object, such as a wall, continues to exist at the same place even during the period when the occlusion due to the placement of the second stationary object in front has occurred.

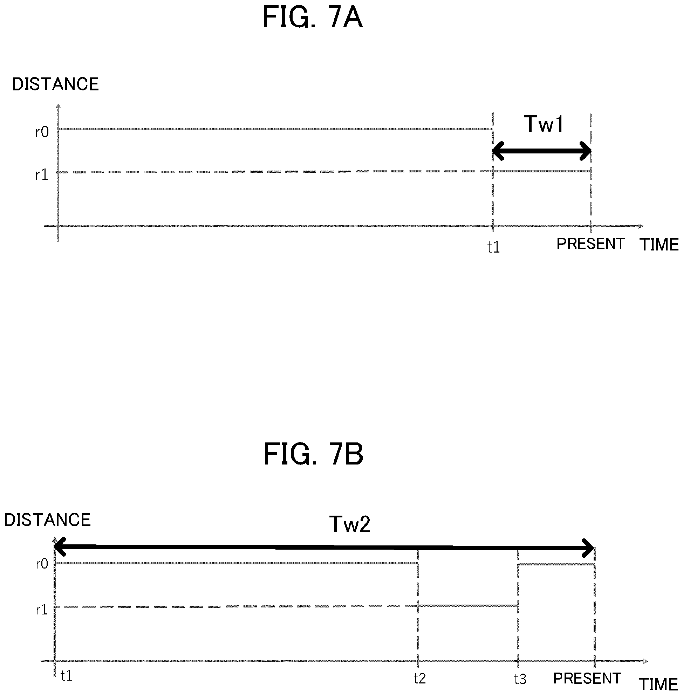

Therefore, in the above-described example, even while the second stationary object is placed in front, it is necessary to store the distance information and information regarding the existence period (measurement time) of the first stationary object such as a wall, in order to determine the first stability degree. Besides, if the second stationary object shielding the first stationary object is moved and thereby the first stationary object is observed again, it is necessary to determine without delay that the first stationary object is an object with a high degree of stability as a stationary object. The calculation of the degree of stability in consideration of the occurrence of this temporal occlusion will be described later with reference to FIG. 7B.

### (3-2) Generation of Distance Histogram and Determination of Distance to Stationary Object

During a predetermined period until the present time, the controller 13 generates distance histograms for each measurement point at predetermined time intervals based on the data measured by the lidar 3. In this case, the length of period for aggregation of each distance histogram is determined to be, for example, the shortest length of time needed to determine the object to be stationary. Specifically, the above-described length of period is set to a fitting value (e.g., 10 seconds) that is determined based on the experimental trials or the like to be "the shortest length of time needed to determine the object to be stationary", and the fit value is stored in advance in the memory 12 or the like. Hereafter, the period for aggregation of each distance histogram is referred to as the "histogram period", and the length of the period is also referred to as "histogram period length".

Supplementary explanation will now be given of the basis that the histogram period length is to be set to "the shortest length of time needed to determine the object to be stationary".

For example, even if the same distance is measured for a period (e.g., for 1 second) shorter than "the shortest length of time needed to determine the object to be stationary", a side surface of a passing object can be measured and there is a possibility that a stationary object is not measured. On the other hand, if the same distance is measured for "the shortest length of time needed to determine the object to be stationary", it is likely that it is a stationary object placed by some intent or a stationary person (a temporarily stopped moving obj ect). Considering the above, it is inferred that the possibility that the object still exists in the same place even at the next measurement timing is higher than the possibility in the case where the same distance is measured for a period shorter than "the shortest length of time needed to determine the object to be stationary". Besides, as in the second embodiment to be described later, in the case of uploading the measurement data of the stationary object measured by the lidar 3 to the server, it is also possible to apply it to the determination of the data transmission frequency, by determining that there is a stationary object if the same distance is measured continuously for "the shortest length of time needed to determine the object to be stationary".

The time interval for generating the distance histogram may be any time interval. For example, the distance histogram may be generated continuously per histogram period length, or may be generated at time intervals shorter than the histogram period length with some overlap of the histogram periods, or may be generated at time intervals longer than the histogram period length.

In some embodiments, the controller 13 may generate measurement time information together with each distance histogram, wherein the measurement time information represents the duration (period of time) in which the distance corresponding to each bin (the distance range considered to be the same in terms of frequency aggregation) of the distance histogram is measured. The measurement time information can be suitably utilized in the determination of the degree of stability (particularly second stability degree).

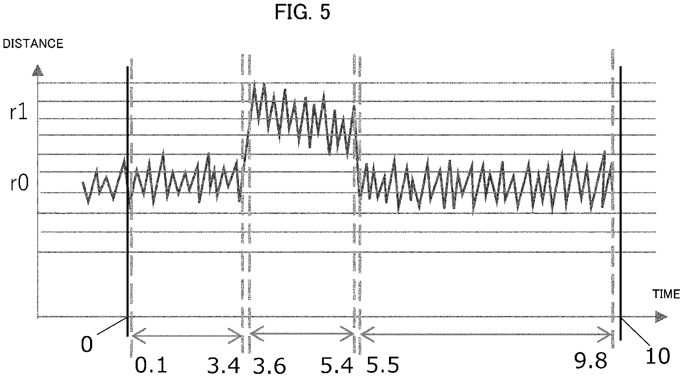

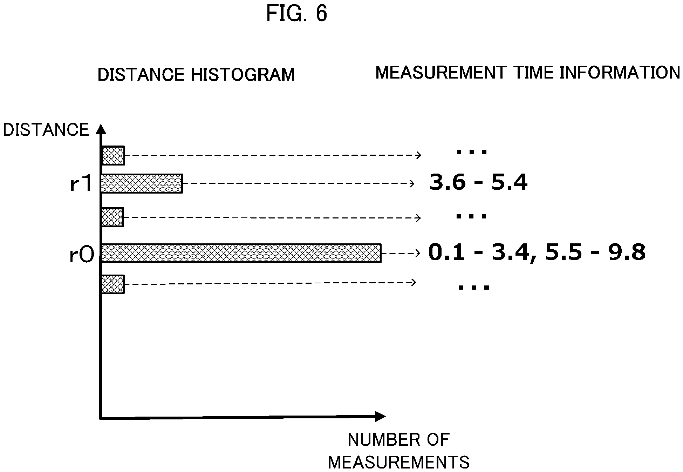

FIG. 5 is a graph showing the relation between the distance measured by the lidar 3 and the time during the histogram period (here 10 seconds) for generating the distance histogram at a certain measurement point. Further, FIG. 6 illustrates a distance histogram generated in the measurement situation of the distance shown in FIG. 5, and the measurement time information representing the measurement time corresponding to each bin of the distance histogram.

The controller 13 aggregates the distances measured by the lidar 3 according to bins each having a predetermined width and generates the distance histogram shown in FIG. 6. Further, the controller 13 generates, based on the relation between the time and the distance shown in FIG. 5, the measurement time information representing the number of measurements for each bin. The measurement time (duration) is proportional to the number of occurrences and equivalent to the time obtained by multiplying the number of measurements by the length of the measurement cycle (scanning period) of the lidar 3.

Next, a description will be given of the determination method of the distance to the stationary object. The controller 13 determines the distance to the stationary object based on the distance histogram as shown in FIG. 6. Specifically, the controller 13 extracts the peak distance (i.e., the most often measured distance) in the distance histogram as the distance to the stationary object. In the example shown in FIG. 6, the controller 13 extracts the distance "r0" as a peak-distance. The controllers 13 then determine that the distance r0 is the distance to the stationary object. Thus, the controller 13 can suitably determine the distance to the stationary object.

Furthermore, in some embodiments, the controller 13 may further determine the presence or absence of a stationary object at the peak distance by further determining whether or not the peak distance has been measured over the entire period (the period from the beginning to the end) of the histogram period, based on the measurement time information generated in association with the distance histogram. In the examples shown in FIGS. 5 and 6, since the peak distance r0 does not occur continuously in the histogram period but occurs intermittently in the histogram period, the controller 13 determines that there is a stationary object at the peak distance r0. For example, if the number of occurrences at the peak distance is more than a predetermined number of times that is previously stored in the memory 12 or the like, the controller 13 may determine that the peak distance has occurred during the entire period of the histogram period. As the example shown in FIGS.5 and 6, in consideration of the occurrence of occlusion, the controller 13 may determine that the peak distance represents the distance to the stationary object, even when the peak distance has intermittently occurred during the entire period of the histogram period. In this way, the controller 13 can determine the distance to the stationary object more accurately.

The controller 13 also calculates the farthest observed distance value (the observed value corresponding to the farthest distance) included in the distance histogram. In this case, in order to omit observed distance values generated by noise, the controller 13 selects, as the farthest observed distance value, the longest distance among distances (i.e., the distances measured a predetermined number of times or more) measured with the frequency equal to or larger than a predetermined threshold value. This farthest observed distance value is used in the generation of stability information which will be described later.

### (3-3) Generation of Stability Information Based on History of Distance to Stationary Object

Next, the generation of the stability information will be described. First, as the degree of stability, a method of generating the stability information when considering only the first stability degree will be described.

For each measurement point and each distance histogram to be generated at predetermined intervals, the controller 13 determines the above-mentioned distance to the stationary object and the farthest observed distance value. Thereby, for each measurement point, time series determination results regarding distance to the stationary object and time series determination results regarding farthest observed distance values. Hereafter, the time series determination results regarding the measured distance to the stationary object is referred to as "measured distance history", and the time series determination results regarding the farthest observed distance values is also referred to as "longest distance history".

Then, based on the measured distance history, the controllers 13 calculates a time length (also referred to as "existence period length Tw") for which the currently-measured stationary object is continuously present, and then generates stability information which indicates the degree of stability corresponding to the existence period length Tw. In this case, based on the measured distance history, for each measurement point, the controller 13 determines the past time point since which the ongoingly-measured stationary object has continuously been measured and calculates the time length to the past time point as the existence period length Tw. Here, the degree of stability indicated by the stability information may be identical as the existence period length Tw, or may be a value normalized so that the existence period length Tw is within a predetermined value range.

FIG. 7A is a graph showing the measured distance history at a certain measurement point. In the example shown in FIG. 7A, a stationary object with a distance "r1" is present continuously for a time length "Tw1" from the time "t1" to the present. In this case, the distance to the stationary object determined for each histogram period is fixed to the distance r1 from the time t1 to the present. On the other hand, before the time t1, there was a stationary object at the distance r0 longer than the distance r1. Therefore, it cannot be determined that the object at the distance r1 has existed continuously since the time before the time t1.

Above things considered, in this case, the controller 13 determines that the stationary object at the distance r1 is present at the measurement point of interest, and that the existence period length Tw is a time length "Tw1" from the time t1 to the present. Then, the controller 13 generates a stability information representing the degree of stability in accordance with the time length Tw1.

Further, in some embodiments, even if the consistent distance measurement of the stationary object is temporarily interrupted, the controller 13 may determines that the stationary object whose measurement is temporarily interrupted is continuously measured, as long as any other object (which is not necessarily a stationary object) existing farther (i.e., with longer measured distance) has not been measured. In this case, if the longest distance history does not include any distance, which is measured in the measurement interrupted period, longer than the measured distance of the stationary object, the controller 13 determines that the stationary object whose measurement is temporarily interrupted is continuously measured. Then, the controllers 13 calculates the existence period length Tw including the period in which the measurement is interrupted. In this case, for example, if the existence period length Tw calculated at a time point immediately before the measurement is temporarily interrupted is a predetermined times longer than the interrupted period length, the controller 13 may calculate the existence period length Tw including the period in which the measurement is interrupted. The above-mentioned predetermined times is set to a fitting value stored in advance, for example, in the memory 12 or the like. Thus, even when an object stably provided, such as a wall that is present for a long time cannot be temporarily measured by occlusion, the controller 13 can set the degree of stability in the stability information regarding the stationary object such as a wall to be high.

FIG. 7B is a graph showing the measured distance history according to another example. In FIG. 7B, a stationary object at the distance r0 is present continuously from the time "t3" to the present time. On the other hand, before the time t3, in the period from the time t2 to the time t3 a stationary object at the distance r1 is present continuously, further in the period from the time t1 to the time t2 a stationary object at the distance r0 is present continuously. Thus, in the example shown in FIG. 7B, the measurement of the stationary object at the distance r0 is temporarily interrupted due to the presence of an object at the distance r1.

In this instance, the controllers 13 compares the length of the first period, in which the measurement is temporarily interrupted, from the time t2 to the time t3, and the length of the second period, in which the distance ro is measured immediately before the interruption of the measurement, from the time t1 to the time t2, and determines that the length of the second period is a predetermined times longer than the length of the first period. In this instance, the controllers 13 determines the existence period length Tw to be the time length "Tw2" of the period from the time t1 to the present time including the period from the time t2 to the time t3 in which the measurement was temporarily interrupted.

In this way, when a particular distance is measured intermittently, based on the length of the period in which the measurement of the distance is interrupted and the length of the preceding period in which the particular distance was measured continuously, the controllers 13 determines the existence period length Tw of the particular distance to be the length of the period in which the particular distance has been measured intermittently. Thus, the controller 13 can eliminate the influence from the occlusion and set a high degree of stability indicated by the stability information regarding the stationary object with high first stability degree.

As described above, based on the measured distance history, the controller 13 accurately calculates the existence period length Tw for each measurement point, to suitably determine the degree of stability of each measurement point. Then, the controller 13 generates stability information representing the set of the determined degree of stability and the currently measured distance for each measurement point. The controller 13 performs generation of the stability information at predetermined time intervals, and stores the generated stability information in the memory 12 or the like. Similarly, the controller 13 stores the measured distance history for each measurement point in the memory 12 or the like so as to be used in the future calculation of the stability information.

### (3-4) Generation of Stability Information Considering Second Stability Degree

Next, a description will be given of the generation of the stability information in consideration of the second stability degree. The controller 13 further generates stability information using the measurement time information generated in association with the distance histogram.

In this case, first, as a premise, the controller 13 calculates the occurrence frequency (i.e., the ratio of the measurement time of the peak distance to the histogram period length) of the peak distance determined as the stationary object when making the determination of the stationary object based on the distance histogram. For example, the occurrence frequency (ratio) of the peak distance r0 in the distance histogram shown in FIG. 6 is about 60 %.

Then, according to the first generation example of the stability information, the controller 13 calculates a total value (also referred to as "weighted total value") of the value obtained by multiplying each histogram period length used to calculate the existent period length Tw by the corresponding occurrence frequency (ratio) of the peak distance. This weighted total value is equivalent to the existence period length Tw weighted based on the occurrence frequency of the stationary object of interest.

For example, in the example shown in FIG. 7A, the occurrence frequency of the peak distance r1 is calculated for every histogram period belonging to the period from the time t1 to the present time, and the sum of the values obtained by multiplying the every histogram period length by the calculated occurrence frequency is calculated as the weighted total value. Then, the controller 13 generates stability information indicative of the degree of stability that is the weighted total value or the normalized value thereof to range within a predetermined value range. According to this method, the controller 13 can suitably generate stability information in consideration of the second stability degree.

According to the second generation example of the stability information, apart from the existence period length Tw, the controller 13 calculates the second stability degree based on the occurrence frequency (ratio) of the peak distance indicated by the measurement time information corresponding to each histogram period constituting the existence period. For example, in this case, the controller 13 calculates the second stability degree that is the total value of the occurrence frequency of the peak distance in each histogram period or the normalized value thereof. Then, based on the first stability degree determined based on the existence period length Tw and the second stability degree determined based on the above-described total value, the controller 13 calculates the degree of stability which merges them by a statistical process such as an average (including a weighted average) thereby to generate stability information indicating the merged degree of stability. Even according to this method, the controller 13 can suitably generate the stability information indicating the degree of stability in which the first stability and the second stability are merged. Instead of generating the stability information representing the degree of stability which merges the first stability degree and the second stability degree, the controller 13 may generate the stability information indicating the first stability degree and the second stability degree, respectively.

Further, in the calculation of the weighted total value, the controller 13 may determine the weights so as to prioritize the proximity to the current time. For example, the controller 13 sets a weight to be put on each histogram period of interest according to whether or not the each histogram period belongs to the current time slot (e.g., a time slot with a predetermined time length selected from a day). This weight is set to a higher value when the each histogram period belongs (or is closer) to the current time (current period of time). The controller 13 may further multiply the weight by a weight corresponding to the occurrence frequency of the peak distance based on the measurement time information used in the first generation example of the stability information described above. The controller 13 calculates the degree of stability that is a total value of values obtained by multiplying each histogram period length by the weight set for the each histogram period or the normalized value of the total value.

In this way, the controller 13 can suitably generate stability information emphasizing the distance measurement result corresponding to the situation close to the current state.

### (3-5) Processing Flow

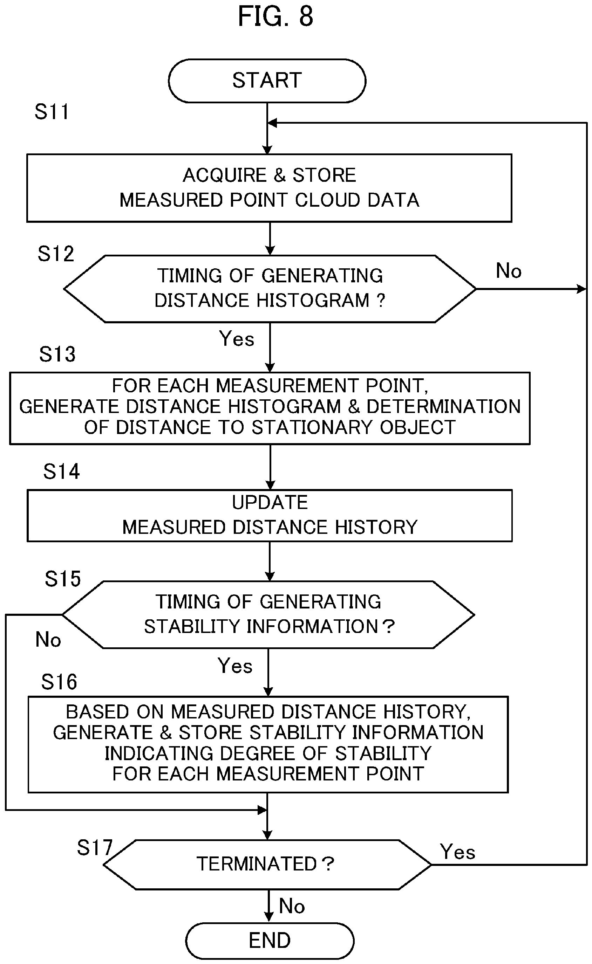

FIG. 8 is an example of a flowchart illustrating a procedure of generating and updating the stability information that is executed by the information processing device 1 according to the first embodiment.

First, the controller 13 of the information processing device 1 acquires the point cloud data measured by the lidar 3 through the interface 11 and stores the data in the memory 12 (step S11). Then, the controller 13 determines whether it is the generation timing of the distance histogram (step S12). For example, based on a predetermined time interval of generating the distance histogram and a predetermined histogram period length, the controller 13 recognizes the histogram period to generate a next histogram. Then, if the point cloud data in the recognized histogram period has been acquired at step S11, the controller 13 determines that now is the generation timing of the distance histogram. The information regarding the generation time interval of the distance histogram and the histogram period length is stored in advance in the memory 12 or the like.

Then, if it is the generation timing of the distance histogram (step S12; Yes), the controller 13 proceeds with the process at step S13. On the other hand, if it is not the generation timing of the distance histogram (step S12; No), the controller 13 gets back to the process at step S11.

Next, at the generation timing of the distance histogram, the controller 13 generates a distance histogram corresponding to the histogram period of interest for each measurement point of the lidar 3, and then determines the distance to the stationary object in the histogram period (step S13). When performing the generation of stability information in consideration of the second stability degree, the controller 13 further generates measurement time information indicating the measurement time (duration) of the measured distance for each bin in addition to the distance histogram.

Then, the controller 13 updates the measured distance history based on the distance determination result of the stationary object determined for each measurement point (step S14). Thus, the measured distance history to which the distance determination result of the stationary object corresponding to the most recent histogram period calculated at step S13 is added is stored in the memory 12 or the like. In addition, when the measurement time information is generated at step S13, the controller 13 adds the measurement time information in association with the distance determination result of the stationary object to the measured distance history. The measurement time information to be added to the measured distance history is not necessarily information representing the measurement time for each bin (see FIG. 6), and may be information regarding the measurement time of the peak distance determined as the distance to the stationary object or the ratio of the measurement frequency based thereon.

Then, the controller 13 determines whether or not it is the generation timing of the stability information (step S15). Then, if it is the generation timing of the stability information (step S15; Yes), the controller 13 generates, based on the measured distance history stored in the memory 12 or the like, stability information indicating the degree of stability for each measurement point, and stores the generated stability information in the memory 12 or the like (step S16).

Next, the controller 13 determines whether or not to terminate the process (step S17). For example, if the scanning by the lidar 3 is stopped, or if a predetermined condition such as detection of instructions of stopping the processing of the controller 13 is satisfied, the controller 13 determines that the process should be terminated. Then, if the controller 13 determines that the process should be terminated (step S17; Yes), the controller 13 ends the process of the flowchart. On the other hand, if the controller 13 determines that it should continue the process (step S17; No), the controller 13 gets back to the process at step S11.

### (4) Modifications

Next, a description will be given of preferred modifications to the first embodiment. The following modification may be applied to the first embodiment described above in any combination.

### (First Modification)

The controller 13 may generate stability information representing the second stability degree as a substitute for the first stability degree.

In this case, for example, the controller 13 generates stability information representing the second stability degree calculated based on the second generation example described in the section "(3-4) Generation of Stability Information Considering Second Stability Degree". Even in this case, the controller 13 can suitably generate useful stability information to be used in the transmission processing or the like of the measurement data from the lidar 3.

In this case, the controller 13 may determine a single histogram period to be the entire period to be considered in the calculation of the degree of stability, instead of setting the histogram period length to be "the shortest length of time needed to determine the object to be stationary" and determining each histogram period at predetermined time intervals. In this case, the controller 13 calculates the occurrence frequency (ratio) of the peak distance based on the distance histogram and the measurement time information corresponding to the single histogram period, and calculates the second stability degree that is the occurrence frequency or its normalized value. Even when the stability information is generated based on this modification, it is possible to generate useful stability information in various applications such as transmission control of the measurement data.

### (Second Modification)

Instead of using the lidar 3, any other external sensor (e.g., a camera capable of measuring the distance) capable of measuring the distance (i.e., position in the depth direction) may be used. Even in this case, the information processing device 1 can suitably generate the stability information based on the time series measurement results of the distance for each measurement point measured by the external sensor.

As described above, the controller 13 of the information processing device 1 according to the first embodiment is configured to acquire measurement results of a distance in time series for each measurement point measured by a lidar 3 that is a measurement equipment for measuring the distance from a fixed position. Then, based on the acquired measurement results, the controller 13 is configured to calculate a distance histogram for each measurement point, the distance histogram representing measurement frequency of measured distances. Then, the controller 13 is configured to generate stability information based on the distance histogram, the stability information representing a degree of stability of measurement of a stationary object for each measurement point. Thereby, the controller 13 can suitably generate useful stability information to be used in the transmission control or the like of the measured data.

### <Second Embodiment>

### (1) Configuration of Data Collection System

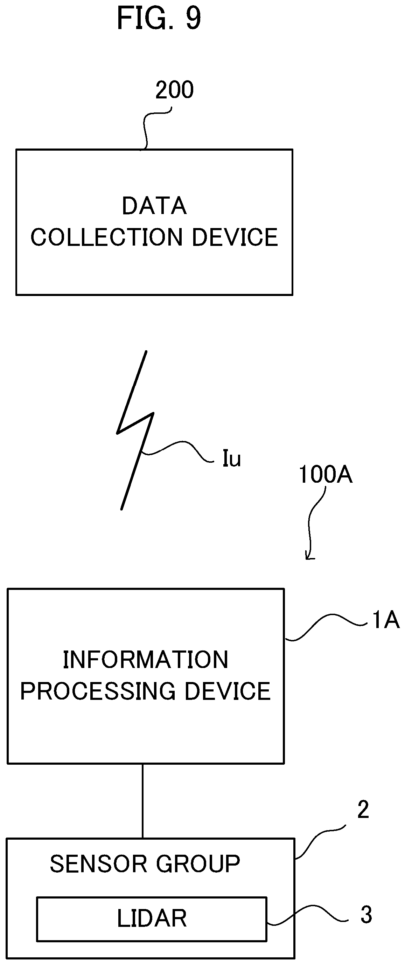

FIG. 9 shows a schematic configuration of a data collection system in the second embodiment. The data collection system includes a lidar unit 100A and a data collection system 200. When the data collection device 200 collects and manages the measurement data generated in the lidar unit 100A, the data collection system suitably reduces the amount of data to be transmitted from the lidar unit 100A to the data collection device 200.

The lidar unit 100A includes an information processing device 1A and a sensor group 2. The information processing device 1A includes an interface 11, a memory 12, and a controller 13 in the same way as the hardware configuration of the information processing device 1 in the first embodiment shown in FIG. 2. Then, the controller 13 of the information processing device 1A transmits the data measured by the lidar 3 to the data collection device 200 as the upload information "Iu" via the interface 11. Further, in the transmission process of the upload information Iu, the controller 13 of the information processing device 1A controls the data transmission frequency for each measurement point of the lidar 3 based on the stability information. The controller 13 of the information processing device 1A generates and updates the stability information in the same way as the information processing device 1 according to the first embodiment, and stores the generated and updated stability information in the memory 12 or the like. The controller 13 is an example of "acquisition unit", "determination unit", "generation unit", "transmission frequency control unit", "transmission unit", and a computer.

The data collection device 200 is a device that collects measurement data from a lidar, and receives the upload information Iu from the information processing device 1, and stores the received upload information Iu. In FIG. 1, although only one set of the lidar unit 100A is shown, instead, a plurality of lidar unit 100A may be present. In this instance, the data collection device 200 receives the upload information Iu from each lidar unit 100A.

### (2) Upload Information Transmission Process

Next, a transmission process of the upload information by the information processing device 1A will be described. When a stationary object is measured by the lidar 3, the information processing device 1A determines, for each measurement point, whether or not to transmit data at the moment, so as to transmit the measurement data with the frequency corresponding to the degree of stability of the stationary object.

### (2-1) Determination of Stationary Object

Here, a method of determining whether or not a stationary object was measured will be described. For each measurement point, the information processing device 1A calculates the difference between the distance (also referred to as "assumed distance") to the stationary object that is assumed to exist and the currently-measured distance (i.e., at the time of determination), and compares the difference with a threshold value (also referred to as "stationary object determination threshold value"). Then, if the difference between the assumed distance and the measured distance is equal to or smaller than the stationary object determination threshold value, the information processing device 1A determines that the assumed stationary object is measured. The method of setting the stationary object determination threshold value will be described later. The assumed distance is a distance assumed to be measured for each measurement point, and may be the distance to the stationary object included in the stability information, or may be a distance measured one processing time before.

Next, a method of setting the stationary object determination threshold value will be described. According to a first determination method of the above-described stationary object determination threshold value, the information processing device 1A determines the stationary object determination threshold value to be a fixed value previously stored in the memory 12 or the like. In this case, the stationary object determination threshold value may be different depending on each measurement point, or may be a common value for all measurement points. According to the second determination method of the stationary object determination threshold value, the information processing device 1A determines the stationary object determination threshold value based on the dispersion (variation) in the measured distance to the stationary object assumed at a measurement point of interest. According to the third determination method of the stationary object determination threshold value, the information processing device 1A determines the stationary object determination threshold value based on the degree of stability indicated by the stability information. As will be described later, the information processing device 1A may determine the stationary object determination threshold value by combining the second determination method and the third determination method.

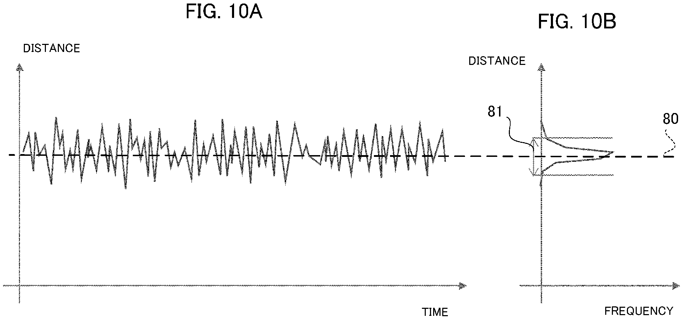

Here, a concrete description will be given of a second determination method of the stationary object determination threshold value. FIG. 10A is a graph showing the variation over time in the measured distance at a certain measurement point. The variation over time in the measured distance indicates the transition of the measured distance during the period (e.g., a period corresponding to the existence period length Tw) in which the stationary object assumed at the certain measurement point is measured. Further, FIG. 10B is a histogram showing the results of frequency aggregation of the measured distance shown in FIG. 10A. Further, the broken line 80 represents the distance (representative distance) to the stationary object included in the stability information. The arrow 81 indicates the range of the measured distance in which a predetermined ratio (e.g., 95%) of the measured distances is distributed.

In this case, the information processing device 1A calculates the variance of the measured distances calculated during the time period in which the stationary object assumed at the certain measurement point has been measured in the past, and sets the stationary object determination threshold value in accordance with the variance. In this instance, based on a predetermined equation or the like, the information processing device 1A increases the stationary object determination threshold value to be set, with increase in the above-described variance. Accordingly, the information processing device 1A suitably sets the stationary object determination threshold value so that the range in which the stationary object is determined to be a stationary object by using the stationary object determination threshold value is set to be the range indicated by the arrow 81 (i.e., the range to which almost all past measured distances to the target stationary object belong).

Next, a specific description will be given of a third determination method of the stationary object determination threshold value. For example, based on a predetermined equation or the like, the information processing device 1A increases the stationary object determination threshold value with increase in the degree of the stability indicated by the stability information. As such, the information processing device 1A changes the stationary object determination threshold value in a direction that is more likely to be determined to be the assumed stationary object as the degree of stability is higher. Thus, the information processing device 1A suitably suppresses the measurement results corresponding to the measurement point with a high degree of stability from being unnecessarily uploaded to the data collection device 200 due to the measurement error or the like. In this instance, in some embodiments, the information processing device 1A may determine the stationary object determination threshold value based on the second stability degree. In this instance, for a measurement point at which occlusion is unlikely to occur, the information processing device 1A sets the stationary object determination threshold value in a direction that is easily determined to be the assumed stationary object. Thus, the information processing device 1A can suitably suppress the measurement data corresponding to the measurement point at which the distance is stably measured from being unnecessarily uploaded to the data collection device 200.

The information processing device 1A may determine the stationary object determination threshold value by combining the second determination method and the third determination method. In this case, for example, the information processing device 1A determines the stationary object determination threshold value based on the variance calculated in the second determination method and the degree of stability used in the third determination method, by referring to a predetermined equation or a look-up table.

### (2-2) Transmission Timing

Next, the transmission timing of the upload information Iu will be specifically described. The information processing device 1A compares, for each measurement point, the difference between the assumed distance and the currently measured distance with the stationary object determination threshold value, and transmits the currently-obtained measurement data at the measurement point at which the difference is larger than the stationary object determination threshold value to the data collection device 200 immediately as the upload information Iu. In this instance, the information processing device 1A determines that an object that is different from the assumed stationary object of the measurement point has been measured, and suitably uploads the latest measurement result from the lidar 3 to the data collection device 200. Accordingly, the information processing device 1A limits the transmission target to the measurement results regarding the measurement points which are different from predicted measurement results and transmits the limited measurement results. Thereby, it is possible to suitably suppress the amount of data.

Further, for measurement points at which the difference between the assumed distance and the currently measured distance is equal to or less than the stationary object determination threshold value, the information processing device 1A transmits the measurement data of the measurement points to the data collection device 200 with the transmission frequency (at transmission intervals) determined based on the degree of stability indicated by the stability information. In this instance, an equation or a look-up table for determining the relation between the degree of stability and the transmission frequency is stored in advance in the memory 12 or the like, and the information processing device 1A determines the transmission frequency by referring to this equation or the like. For example, the information processing device 1A transmits, at 10 minutes intervals, the measurement data of the measurement point with the degree of stability corresponding to one hour of the existence period length Tw, and transmits, at one hour intervals, the measurement data of the measurement point with the degree of stability corresponding to one day of the existence period length Tw, and transmits, at every frame, the measurement data of the measurement point with the degree of stability corresponding to one second of the existence period length Tw.

In these cases, the information processing device 1A transmits, as the upload information Iu to the data collection device 200, the measurement result corresponding to the measurement point at which the time interval from the preceding transmission timing to the present timing is equal to or more than the time interval corresponding to the transmission frequency determined based on the degree of stability. Thus, the information processing device 1A can upload the measurement results of the respective measurement points to the data collection device 200 with an appropriate frequency corresponding to the degree of stability.

### (2-3) Processing Flow

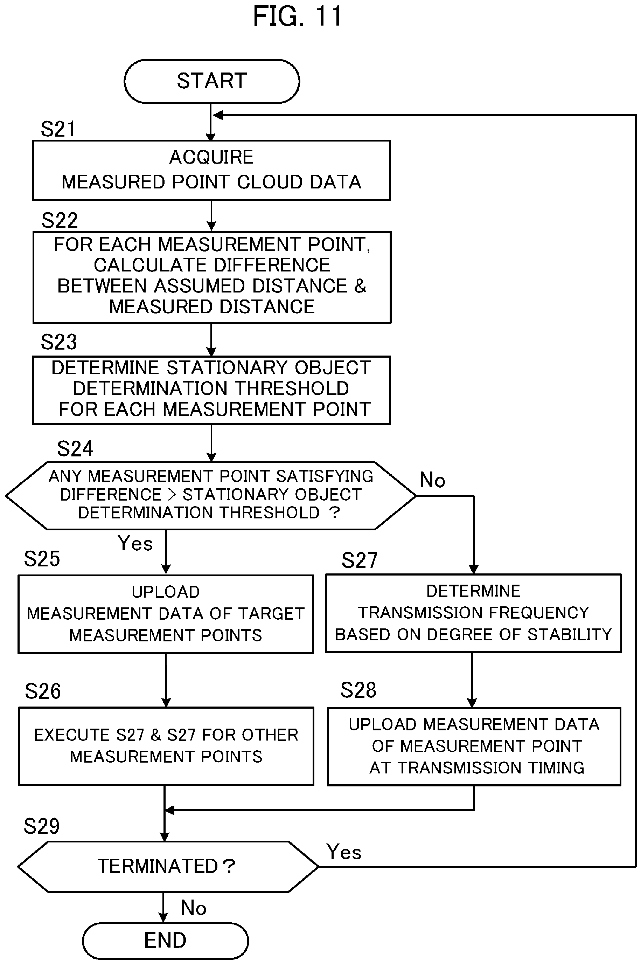

FIG. 11 is an exemplary flowchart illustrating a procedure of the upload process performed by the information processing device 1A. The information processing device 1A may perform the upload process illustrated in FIG. 11 in parallel with the flowchart of the generation / updating process of the stability information shown in FIG. 8.

First, the information processing device 1A acquires point cloud data including the measurement result at every measurement point measured by the lidar 3 in one cycle scanning (step S21).

Then, for each measurement point, the information processing device 1A calculates a difference between the assumed distance based on the stability information or the like and the measured distance based on the point cloud data acquired at step S21 (step S22). Furthermore, the information processing device 1A determines the stationary object determination threshold value for each measurement point (step S23). In this instance, the information processing device 1A may determine the stationary object determination threshold value to be a value stored in the memory or the like, or may determine the stationary object determination threshold value adaptively based on the variance of the measured distances or/and the degree of stability.

Then, the information processing device 1A determines whether or not there are one or more measurement points at which the difference calculated at step S22 is larger than the stationary object determination threshold value determined at step S23 (step S24). If there are one or more measurement points at which the difference is larger than the stationary object determination threshold value (step S24; Yes), the information processing device 1A determines that an object other than the assumed stationary object is detected at the one or more measurement points, and uploads the measurement data of the one or more measurement points to the data collection device 200 immediately as the upload information Iu (step S25). Further, the information processing device 1A executes the processes at step S27 and step S28 to be described later for the measurement data of the measurement points at which the difference is equal to or less than the stationary object determination threshold value (step S26). Thus, the information processing device 1A uploads the measurement data to the data collection device 200 as the upload information Iu with the transmission frequency based on the degree of stability, for the measurement results of the one or more measurement points at which the assumed stationary object is detected.

On the other hand, if there is no measurement point at which the difference is larger than the stationary object determination threshold value (step S24; No), the information processing device 1A determines the transmission frequency for each measurement point based on the degree of stability indicated for each measurement point by the stability information (step S27). Then, the information processing device 1A uploads measurement results of the measurement points determined to be transmitted based on the transmission frequency determined at step S27 to the data collection device 200 as the upload information Iu (step S28). The information processing device 1A may transmit the upload data Iu compressed by any lossless compression or irreversible compression to the data collection device 200.

Next, the controller 13 determines whether or not to terminate the process (step S29). For example, the controller 13 determines that the process should be terminated if the scanning by the lidar 3 is stopped, or if a predetermined condition such as detection of instructions of stopping the processing of the controller 13 is satisfied. Then, if it is determined to terminate the process (step S29; Yes), the controller 13 terminates the process of the flowchart. On the other hand, if it is determined to continue the process (step S29; No), the controller 13 gets back to the process at step S21.

### (3) Modifications

Next, a description will be given of preferred modifications to the second embodiment. The following modifications may be applied to the second embodiment described above in any combination.

### (First Modification)

Instead of generating and updating the stability information according to the first embodiment, the information processing device 1A may store the stability information generated in advance in the memory 12 or the like. In this case, for example, the stability information, includes information regarding the distance to the stationary object assumed to be measured within the measurement range of the lidar 3 and the degree of stability. Even when referring to such stability information, on the basis of the degree of stability for each measurement point indicated by the stability information, the information processing device 1A can suitably determine the transmission frequency of the measurement data of the stationary object for each measurement point and the stationary object determination threshold value to be used for determination of the stationary object.

### (Second Modification)

The lidar unit 100A may be equipped with any external sensor, other than the lidar 3, configured to measure the distance or a camera which does not measure the distance.

For example, when the lidar unit 100A includes a camera that cannot measure the distance, the stability information representing the degree of stability of measurement of the stationary object for each measurement point corresponding to each pixel is stored in the memory 12 or the like. Then, the information processing device 1A detects an image area in which a stationary object exists, based on an image generated by the camera, using a known object recognition technique or the like, and determines the transmission frequency of data on the basis of the degree of stability for each measurement point indicated by the stability information for pixels (measurement points) at which a stationary object is determined to exist. On the other hand, the information processing device 1A immediately transmits the data of the area other than the image area in which the stationary object exists to the data collection device 200 as the upload information Iu. In this way, according to this modification, even when transmitting the measurement results from the measurement device other than the lidar 3 to the data collection device 200, it is possible to suitably reduce the amount of data to be transmitted.

As described above, the controller 13 of the information processing device 1 according to the present embodiment is configured to acquire a measurement result for each measurement direction by a lidar 3 that is a measurement device configured to perform measurement from a fixed position. Then, the controller 13 is configured to determine a transmission frequency of transmitting, to the data collection device 200, the measurement result for a measurement point at which it is determined that a stationary object is measured, based on a degree of stability at the measurement point. Thus, the controller 13 accurately determines the transmission frequency of the measurement result corresponding to the measurement point at which the assumed stationary object is measured, thereby suppressing an increase in the amount of data of the upload information Iu.

In the embodiments described above, the program is stored by any type of a non-transitory computer-readable medium (non-transitory computer readable medium) and can be supplied to a control unit or the like that is a computer. The non-transitory computer-readable medium include any type of a tangible storage medium. Examples of the non-transitory computer readable medium include a magnetic storage medium (e.g., a flexible disk, a magnetic tape, a hard disk drive), a magnetic-optical storage medium (e.g., a magnetic optical disk), CD-ROM (Read Only Memory), CD-R, CD-R/W, a solid-state memory (e.g., a mask ROM, a PROM (Programmable ROM), an EPROM (Erasable PROM), a flash ROM, a RAM (Random Access Memory)).

While the present invention has been described with reference to the embodiments, the present invention is not limited to the above embodiments. Various modifications that can be understood by a person skilled in the art can be made to the configuration and details of the present invention within the scope of the present invention. Namely, the present invention includes, of course, various modifications that may be made by a person skilled in the art according to the entire disclosure including claims and technical ideas. In addition, all Patent and Non-Patent Literatures mentioned in this specification are incorporated by reference in its entirety.

### DESCRIPTION OF REFERENCE NUMERALS

- 1, 1A: Information processing device
- 2: Sensor group
- 3: Lidar
- 100, 100A: Lidar unit
- 200: Data collection device

## Claims

1. An information processing device comprising:
an acquisition unit configured to obtain a measurement result for each measurement point corresponding to a measurement direction by a measurement device for performing measurement from a fixed position;
a determination unit configured to determine, for the each measurement point, whether or not an assumed stationary object is measured, based on the measurement result; and
a transmission frequency control unit configured to determine transmission frequency of transmitting, to a data collection device, the measurement result of a measurement point at which it is determined that the assumed stationary obj ect is measured, based on a degree of stability of measurement of the assumed stationary object at the measurement point.

2. The information processing device according to claim 1, further comprising
a transmission unit configured to
transmit, to the data collection device with the transmission frequency, the measurement result of the measurement point at which it is determined that the assumed stationary object is measured, and
transmit, to the data collection device immediately, the measurement result of a measurement point at which it is determined that the assumed stationary obj ect is not measured.

3. The information processing device according to claim 1 or 2,
wherein the measurement device is configured to measure a distance for the each measurement point, and
wherein the determination unit is configured to determine, for the each measurement point, whether or not the assumed stationary object is measured, based on a difference between a measured distance measured by the measurement device and an assumed distance to the assumed stationary object.

4. The information processing device according to claim 3,
wherein the determination unit is configured to determine, for the each measurement point, whether or not the assumed stationary object is measured, based on the difference and a threshold value set based on an index of variation in the past measured distance.

5. The information processing device according to claim 3,
wherein the determination unit is configured to determine, for the each measurement point, whether or not the assumed stationary object is measured, based on the difference and a threshold value set based on the degree of stability.

6. The information processing device according to any one of claims 1 to 5,
wherein the transmission frequency control unit is configured to determine the transmission frequency, based on the degree of stability identified by referring to stability information at least indicating the degree of stability for the each measurement point.

7. The information processing device according to claim 6, further comprising
a generation unit configured to generate the stability information based on time series measurement results for the each measurement point by the measurement device.

8. The information processing device according to any one of claims 1 to 7,
wherein the degree of stability is
a first stability degree representing a degree of stability of existence of the assumed stationary object as a stationary object,
a second stability degree representing a degree of stability of measurement of the assumed stationary object without being shielded by another object, or
an index obtained by merging the first stability degree and the second stability degree.

9. A control method executed by a computer, the control method comprising:
obtaining a measurement result for each measurement point corresponding to a measurement direction by a measurement device for performing measurement from a fixed position;
determining, for the each measurement point, whether or not an assumed stationary object is measured, based on the measurement result; and
determining transmission frequency of transmitting, to a data collection device, the measurement result of a measurement point at which it is determined that the assumed stationary object is measured, based on a degree of stability of measurement of the assumed stationary object at the measurement point.

10. A program executed by a computer, the program causing the computer to:
obtain a measurement result for each measurement point corresponding to a measurement direction by a measurement device for performing measurement from a fixed position;
determine, for the each measurement point, whether or not an assumed stationary object is measured, based on the measurement result; and
determine transmission frequency of transmitting, to a data collection device, the measurement result of a measurement point at which it is determined that the assumed stationary object is measured, based on a degree of stability of measurement of the assumed stationary object at the measurement point.

11. A storage medium storing the program according to claim 10.
